# FASCICULE DE BREVET EUROPEEN

(11) **EP 3 613 196 B1**
(45) Date de publication et mention de la délivrance du brevet: **25.10.2023**
(21) Numéro de dépôt: 18715207.9
(22) Date de dépôt: 16.03.2018
(51) Int. Cl.: H04L 67/125, H04L 67/12, H04L 67/61

(54) **TRAITEMENT D'INFORMATIONS ACQUISES PAR UNE PLURALITÉ DE CAPTEURS D'UN VÉHICULE AUTOMOBILE**
VERARBEITUNG VON DURCH MEHRERE SENSOREN EINES KRAFTFAHRZEUGES ERFASSTEN INFORMATIONEN
PROCESSING INFORMATION ACQUIRED BY A PLURALITY OF SENSORS OF AN AUTOMOTIVE VEHICLE

(30) Priorité: 18.04.2017 FR 1753323
(43) Date de publication de la demande: 26.02.2020
(73) Titulaire: PSA Automobiles SA, 78300 Poissy (FR)
(72) Inventeur: CHANE SHA LIN, Benjamin, 78700 Conflant Ste Honorine (FR); LE CHAFFOTEC, Alban, 95130 Le Plessis Bouchard (FR); BENACHOUR, Asma Nadjet, 93100 Montreuil (FR)
(86) Numéro de dépôt international: PCT/FR2018/050647
(87) Numéro de publication internationale: WO 2018/193175

(56) Documents cités:
- WO-A1-2014/164168
- EWALD A ET AL: "Laser scanners for obstacle detection in automotive applications", INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, 3 octobre 2000 (2000-10-03), pages 682-687, XP010529017, DOI: 10.1109/IVS.2000.898427 ISBN: 978-0-7803-6363-2

## Description

L'invention porte sur les véhicules équipés d'une pluralité de capteurs aptes à restituer l'environnement desdits véhicules et se rapporte plus particulièrement à un procédé de traitement d'informations acquises par lesdits capteurs pour robustifier la perception de l'environnement par un véhicule automobile, notamment un véhicule automobile disposant d'un mode de conduite autonome.

Par mode de conduite autonome, on entend un mode de conduite pour lequel le véhicule peut évoluer sur route ouverte sans intervention humaine.

Un tel véhicule est également désigné par « véhicule autonome ».

Par route « ouverte », on entend une route ouverte à la circulation.

On connait par le document A. Ewald and V. Willhoeft, "Laser scanners for obstacle détection in automotive applications," Proceedings of the IEEE Intelligent Vehicles Symposium 2000 (Cat. No.00TH8511), 2000, pp. 682-687, doi: 10.1109/IVS.2000.898427, un scanneur laser pour la détection d'obstacles dans les applications automobile.

Pour pouvoir orienter et sécuriser l'évolution d'un véhicule autonome sur route ouverte, il est nécessaire d'utiliser un grand nombre de capteurs implantés à différents endroits du véhicule et qui sont capables d'acquérir puis délivrer des informations sur l'environnement du véhicule, sur les caractéristiques du véhicule en statique ou en dynamique, sur le comportement/l'état du véhicule et de son conducteur (en cas de passage entre mode de conduite autonome et mode de conduite standard), ... Les capteurs sont les éléments de base des systèmes d'acquisition de données.

Ces informations (ou données) sont ensuite exploitées par un ou des calculateurs du véhicule qui communiquent entre eux en empruntant des voies filaires (réseau ou bus CAN, LIN, Flexray, Ethernet, LVDR, ...) et/ou par voie d'ondes (bluetooth, Wifi, GSM, ...), à des fins d'assistance à la conduite, de confort thermique/climatique, de confort tout court, de prévention d'accident, de maintenance, ou sont utilisées pour offrir différents services au conducteur : navigation, communication entre véhicules/infrastructure, ...

Les capteurs sont des composants incontournables pour amener progressivement le véhicule depuis un mode de conduite dans lequel le conducteur doit rester maître de son véhicule, en ayant à sa disposition toute une panoplie de dispositifs d'aide à la conduite ou ADAS (Advanced Driver Assistance Systems), jusqu'à un mode de conduite dans lequel le conducteur délègue son contrôle au véhicule. S'assurer de la robustesse des informations délivrées par les capteurs devient alors une obligation pour garantir la sécurité des occupants du véhicule autonome.

Cette progression vers l'autonomie est spécifiée notamment par l'OCEA par des niveaux (ou « Levels » en terminologie anglo-saxonne) numérotés de 1 à 5 (Le niveau le plus élevé dans l'échelle numérique correspond au niveau d'autonomie le plus élevé : Level 5 pour lequel la conduite est entièrement déléguée au véhicule)

Un capteur peut acquérir différents types d'informations en fonction de la nature du capteur : RADAR, LiDAR, vidéo caméra, LASER scanner, ... et du type de capteur : ultrasons, CCD (Charge Coupled Device), ... sur des objets qui apparaissent et disparaissent dans l'environnement proche du véhicule. Par exemple, les informations acquises par les capteurs sont : la localisation de l'objet, l'horodatage de l'objet pour cette localisation et d'autres caractéristiques comme la nature de l'objet : piéton, cycliste, etc.

Certains capteurs sont capables de faire du suivi d'objet par eux-mêmes. Cela signifie que le capteur peut non seulement détecter un objet mais qu'il peut également suivre cet objet tant que ce dernier se trouve dans la plage d'acquisition du capteur. Dans ce cas le capteur intègre un transducteur (« couche » physique du capteur) et des moyens de traitement du signal délivré par le transducteur réunis dans un même boitier.

Ces moyens de traitement sont une combinaison de moyens, ou composants, logiciels (rassemblés sous la terminologie anglo-saxonne « Software ») et de moyens, ou composants, matériels (rassemblés sous la terminologie anglo-saxonne « Hardware »). Ces derniers moyens sont physiquement constitué d'un circuit électronique implanté sur une carte de circuit imprimée PCB (Printing Circuit Board en terminologie anglo-saxonne).

Le terme « capteur » considère donc l'ensemble constitué du boitier, du transducteur et du circuit électronique de traitement du signal délivré par le capteur.

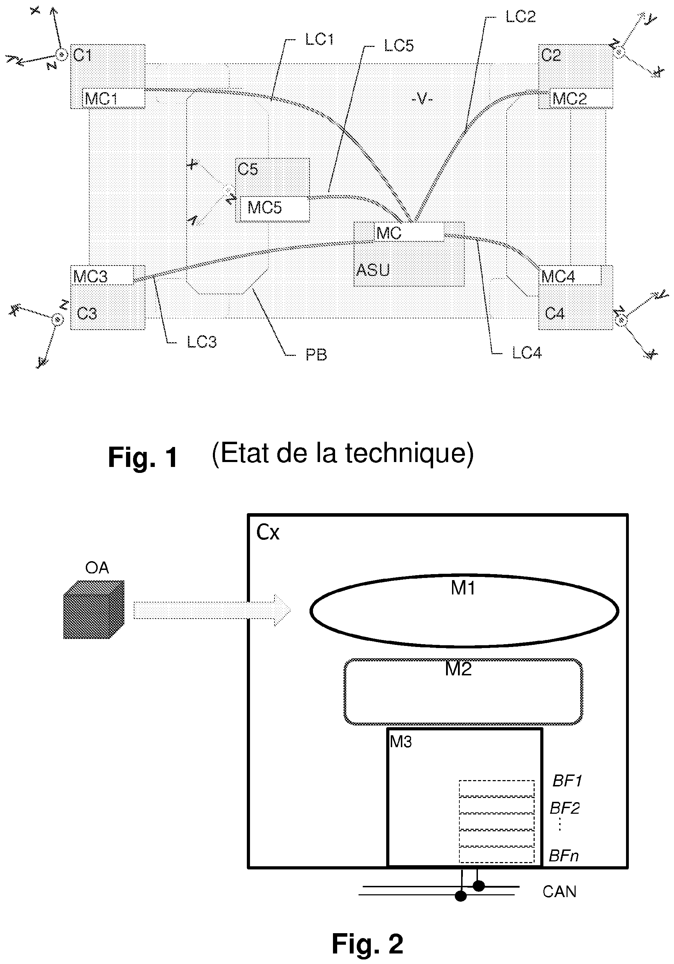

La figure 1 illustre schématiquement, une architecture connue d'implantation de plusieurs capteurs, ici cinq capteurs C1-C5, sur un véhicule V.

On trouve typiquement quatre RADAR disposés à chacun des angles du véhicule V, pour les capteurs C1-C4, une vidéo caméra disposée en haut de parebrise PB, pour le capteur C5, et un module de commande électronique ASU pour « ADAS System Unit » dans un véhicule V. Quatre C1-C4 des cinq capteurs C1-C5 sont disposés respectivement aux quatre coins du véhicule V et le cinquième capteur C5 est disposé en haut du parebrise PB du véhicule V.

Le module ASU est couplé à un calculateur habitacle, non représenté sur la figure 1. Dans un autre exemple, le module de calcul peut être intégré dans l'un des capteurs C1-C5.

Chaque capteur C1-C5 communique avec le moyen de communication MC vers le module ASU par un réseau de communication, par exemple de type CAN (Controller Aera Network) du véhicule V, symbolisé par les liaisons LC1-LC5, par l'intermédiaire de leurs moyens de communication respectifs MC1-MC5. Dans cette architecture, chaque capteur C1-C5 a son propre système de coordonnées ou référentiel tridimensionnel local x-y-z.

Chacun des capteurs C1-C5 est donc en mesure de déterminer où se trouve l'objet dans son référentiel local x-y-z, donc de le localiser (« de le voir ») et ce, à partir de son propre point de vue. Il y a donc cinq points de vue différents si on considère l'exemple de la figure 1.

Afin de vérifier que tous les capteurs ont «vu» le même objet, un algorithme de vraisemblance mettant en oeuvre, par exemple, un estimateur du maximum de vraisemblance (EMV) peut être utilisé.

Selon le procédé selon l'invention, un changement de système de coordonnées est opéré et les caractéristiques de l'objet sont régulièrement comparées aux données délivrées par chaque capteur C1-C5.

L'indice élevé de vraisemblance sur une position commune, pour un instant donné, ainsi que les caractéristiques de l'objet communément identifiées par les capteurs C1-C5, permettent de s'assurer que les différents capteurs C1-C5 ont « vu » le même objet.

Un grand nombre de données (plusieurs données par objet et plusieurs objets par capteur) doivent être transmises par tous les capteurs C1-C5 au module ASU via le réseau CAN. C'est le module ASU qui exécute l'algorithme de vraisemblance.

Le protocole de communication mis en oeuvre par chaque moyen de communication MC1-MC5 n'impose pas un ordre précis des données qui peuvent donc être envoyées sans aucun ordre précis (sans organisation). Cette désorganisation des données demande plus de ressources au module ASU en charge d'exécuter l'algorithme de vraisemblance (temps CPU, taille mémoire RAM) en charge d'identifier les données en correspondance, c'est-à-dire les données permettant de confirmer que le même objet est vu par l'ensemble des capteurs C1-C5.

D'autre part, les capteurs C1-C5 ayant chacun accès au moyen de communication MC du module ASU, peuvent échanger simultanément avec lui en créant un encombrement sur les liaisons LC1-LC5 entre les capteurs C1-C5 et le module de calcul ASU. Ce qui peut se traduire par un retard de durée variable, dans la transmission des données sur le réseau CAN auquel est connecté le module ASU et ainsi impacter le temps de réaction du système gérant le véhicule V en mode de conduite « autonome », face à une situation de danger.

Ce retard de durée variable, désigné par le terme « jitter » dans la terminologie anglo-saxonne, perturbe le cadencement des données représentatives du même objet vu par l'ensemble des capteurs C1-C5 sur le réseau CAN.

Dans le domaine des transmissions numériques et plus particulièrement des transmissions numériques utilisant des liaisons série, le terme « jitter» est utilisé pour désigner le phénomène de fluctuation d'un signal. Cette fluctuation peut être due à un glissement de phase ou à une dispersion temporelle du signal. Elle entraîne des erreurs en sortie des liaisons lors de la récupération des données.

Le but de la présente invention est de proposer un procédé permettant d'organiser les données représentatives des objets « vus » par l'ensemble des capteurs C1-C5 afin de minimiser le phénomène désigné par « jitter ».

A cet effet, elle a pour premier objet, un procédé de traitement d'informations issues d'une pluralité de capteurs embarqués sur un véhicule automobile, lesdits capteurs comportant chacun des moyens d'acquisition de données relatives à un ou plusieurs objets présents dans l'environnement du véhicule et localisés dans un référentiel déterminé propre à chaque capteur et à différents instants, des moyens de traitement desdites données et des moyens de communication des données comportant plusieurs mémoires tampon dans lesquelles sont stockées les données avant leur transmission vers un module de commande via un réseau de communication du véhicule, ledit procédé étant caractérisé en ce qu'il consiste à utiliser un seul et même référentiel commun pour le ou les objets localisés par chaque capteur, les coordonnées du ou des objets localisés dans les référentiels locaux propres à chaque capteur étant converties dans le référentiel commun, et en ce que les mémoires tampon de chaque capteur sont configurés pour transmettre selon un ordre de priorité fonction d'une ou plusieurs caractéristiques ou critères du ou des objets localisés par chaque capteur dans le référentiel commun des données de chaque capteur sur le réseau , chaque capteur appliquant un même ordre de priorité.

Selon une caractéristique de ce premier objet, la caractéristique du ou des objets prise en compte pour définir la priorité de transmission des données, est la proximité du ou des objets considérés par rapport l'origine du référentiel commun à un instant déterminé.

Selon une autre caractéristique, le réseau est un réseau CAN et en ce que des trames de données correspondant à ou aux objets sont organisées en fonction d'un identifiant du réseau CAN qui est attribué dynamiquement à chacun des capteurs en fonction d'une priorité déterminée pour être transmises sur le réseau CAN ; l'identifiant déterminant l'ordre de transmission des données sur le réseau CAN.

Selon une autre caractéristique, le critère du ou des objets pris en compte pour définir la priorité de transmission des données, est la nature de l'objet lui-même ; un objet correspondant à un cycliste ou un piéton étant prioritaire sur un objet correspondant à un autre véhicule.

Selon une autre caractéristique du procédé décrit ci-dessus, la caractéristique du ou des objets a un identifiant spécifique pour chaque objet et reconnaissable par chacun des capteurs ; ledit identifiant définissant par lui-même la priorité de transmission.

Selon une autre caractéristique, les coordonnées du ou des objets localisés dans les référentiels locaux, propres à chaque capteur, sont converties dans le référentiel commun correspondant au référentiel du véhicule.

Selon une autre caractéristique, les capteurs sont choisis parmi les capteurs suivants : RADAR, LiDAR, sonar, LASER scanner, caméra, capteur ultrasons, capteur infrarouge.

L'invention a pour deuxième objet, un véhicule autonome mettant en oeuvre le procédé tel que décrit ci-dessus.

Ce procédé prend en compte les caractéristiques des objets pour pouvoir organiser les données au sein même de chaque capteur C1-C5 avant de les transmettre sur le réseau CAN, dans le cas du véhicule V, en prenant également en compte la technologie du réseau qui peut être : LIN, Flexray, LVDS, ...

Ainsi, le module ASU reçoit toutes les données relatives à un même objet avec seulement très peu de « jitter». L'algorithme de vraisemblance est simplifié car requérant moins de ressources (temps CPU en taille mémoire RAM) pour les moyens chargés d'exécuter l'algorithme de vraisemblance.

Par conséquent, les objets "vus" par l'ensemble des capteurs C1-C5, peuvent se voir attribuer un identifiant (ID-Object) unique pour l'ensemble des capteurs C1-C5.

Bien que le procédé selon l'invention ne soit pas limité dans son principe par le nombre de capteurs, l'organisation des communications entre les capteurs C1-C5 et le réseau CAN ou la définition des communications entre les capteurs et le réseau doit être adapté en fonction du nombre de capteurs et de la technologie utilisée pour le réseau (partage de la bande passante entre chaque capteur, ...)

L'invention sera mieux comprise et d'autres caractéristiques et avantages apparaîtront plus clairement à la lecture de la description ci-après donnée à titre d'exemple, en référence aux dessins annexés dans lesquels :
La figure 1, déjà décrite, illustre une architecture connue d'implantation de plusieurs capteurs sur un véhicule ;
La figure 2, illustre une architecture type d'un capteur monté sur un véhicule mis en oeuvre par le procédé selon l'invention ;
La figure 3 illustre schématiquement une première étape du procédé selon l'invention ;
La figure 4 illustre schématiquement une deuxième étape du procédé selon l'invention ;
La figure 5 illustre schématiquement une troisième étape du procédé selon l'invention ;
La figure 6 illustre un premier tableau d'une première organisation des « buffers » dits de communication, mis en oeuvre par le procédé selon l'invention ;
La figure 7 illustre une première organisation de trames de données conformément au tableau de la figure 6 ;
La figure 8 illustre un deuxième tableau d'une deuxième organisation des « buffers » dits de communication, mis en oeuvre par le procédé selon l'invention ; et
La figure 9 illustre une deuxième organisation de trames de données conformément au tableau de la figure 8.

Sur les figures, les mêmes éléments ou similaires, sont repérées par les même références.

Différents types de capteur (RADAR, LiDAR, caméra, LASER scanner, ...) sont aptes à percevoir l'environnement du véhicule. Quel que soit le capteur, il est toujours possible de distinguer dans les données délivrées par les capteurs, celles qui concernent l'environnement du véhicule, leurs formatages/traitements ainsi que leur état dans leurs mémoires de stockage, ou mémoire tampon, dédiées à la communication, désignées également par « buffers » dans la terminologie anglo-saxonne. Par état dans une mémoire, on entend généralement le taux de remplissage de la mémoire des piles/registres dédiés à la communication (couche logicielle SW ou matérielle HW). Ces « buffers » sont utilisés pour stocker les données avant de les émettre sur le réseau du véhicule (mise en file d'attente) ou pour stocker les données venant du réseau du véhicule. Cette mémoire peut être triée de manière à organiser la file d'attente.

La figure 2 illustre une architecture d'un capteur de type quelconque X monté sur un véhicule, avec ses différents moyens fonctionnels et leurs interactions lorsqu'un objet OA est détecté dans l'environnement du capteur CX.

Des premiers moyens M1 sont destinés à faire l'acquisition des informations représentative de l'environnement du capteur X et donc du véhicule V. Des deuxièmes moyens M2 sont dédiés au traitement (calcul, formatage, ...) des informations délivrées par les premiers moyens M1 pour en extraire la présence de l'objet OA et ses coordonnées (sa position ou localisation) dans le référentiel x-y-z du capteur CX. Les données de position de l'objet OA « Object-Data » sont ensuite stockées dans des troisièmes moyens de communication M3 comportant une pluralité de « buffers » (mémoires tampon) BF1 à BFn. Les troisièmes moyens M3 correspondent aux moyens de communication MCX en référence à la figure 1. Les données sont ensuite transmises au module ASU via le réseau CAN.

Dans ce qui suit, la position d'un objet par rapport au véhicule et par rapport aux autres objets présents dans l'environnement du véhicule, est utilisée pour déterminer l'ordre dans lequel le « buffer » communique les données à transmettre au module ASU, à titre d'exemple.

D'autres caractéristiques ou critères telle que la nature de l'objet (vélo, piéton, ...) peuvent être utilisées dès lors que tous les capteurs font l'acquisition de ces caractéristiques ou critères.

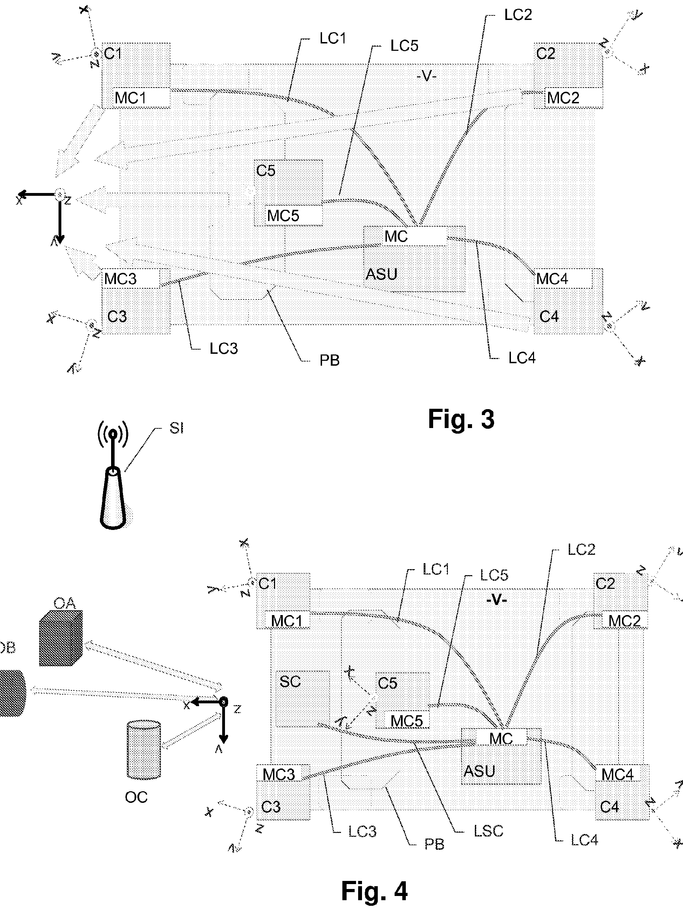

La figure 3 illustre schématiquement une première étape du procédé selon l'invention.

Dans cette étape, chaque capteur C1-C5 respecte un système de coordonnées commun (référentiel commun) X-Y-Z.

Pour cela, chaque capteur C1-C5 calcule les nouvelles coordonnées de l'objet OA dans le même et seul référentiel commun X-Y-Z à tous les capteurs C1-C5 (changement de référentiel).

La figure 4 illustre schématiquement, une deuxième étape du procédé selon l'invention.

Dans l'exemple illustré à la figure 4, trois objets OA, OB et OC sont « vus » par les trois capteurs C1, C3 et C5. Ces objets OA, OB et OC ont des coordonnées différentes à différents instants considérées dans le seul et même référentiel commun X-Y-Z.

Si une autre information que la position des objets OA, OB et OC par rapport au véhicule V est utilisée, alors tous les capteurs C1, C3 et C5 doivent faire l'acquisition de cette information.

Dans l'exemple considéré, des objets OA et OB sont « vus » dans le même intervalle de temps t0 à tn avec pour coordonnées respectives Xa ; Ya ; Za et Xb ; Yb ; Zb dans le référentiel commun X-Y-Z. L'objet OB est plus éloigné du véhicule V par rapport à l'objet OA. La distance séparant l'objet OB de l'origine du référentiel commun X-Y-Z est plus grande que celle séparant l'objet OA de l'origine du référentiel commun X-Y-Z.

Un troisième objet OC est « vu » à partir de l'instant t2 soit après l'instant t0 et est le plus proche du véhicule V par rapport aux deux objets OA et OB.

Chaque capteur C1, C3 et C5 organise, dans sa couche logicielle de transport (Niveau/couche 4 du modèle « OSI » (Open Systems Interconnection), les données des objets OA, OB et OC de la même manière ; données considérées dans le référentiel commun X-Y-Z.

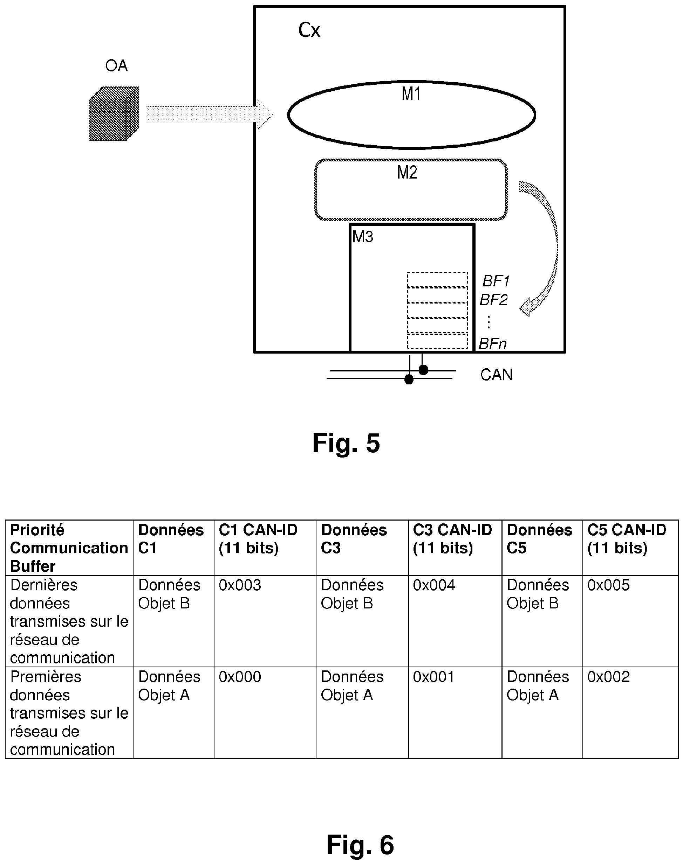

La figure 5 illustre schématiquement, l'étape consistant à organiser les « buffers » en fonction des objets « vus » par les capteurs CX. Elle est similaire à la figure 2 et n'est donc pas décrite à nouveau. Les moyens de traitement M2 trient les buffers BF1-BFn en fonction de caractéristiques de l'objet OA vu par tous les capteurs C1, C3 et C5. Ce tri est symbolisé par une flèche pleine. Ce tri est appliqué à tous les objets que les capteurs CX peuvent « voir ».

Les données concernant les objets « vus » par les capteurs C1, C3 et C5 sont envoyés sur le réseau CAN vers le module ASU, en prenant en compte les caractéristiques de la technologie du réseau pour que le module de traitements reçoive les données relatives au même objet avec le moins de «jiter » possible.

Le tableau de la figure 6 illustre un premier exemple d'organisation des « buffers » BF1-BFn dits de communication, à l'intérieur de chacun des capteurs C1, C3 et C5 suite à l'identification des objets OA et OB, au même instant t0.

Dans ce tableau, la priorité de transmission des données sortantes des « buffers » BF1-BFn pour chacun des capteurs C1, C3 et C5 vis-à-vis des deux objets OA et OB, est fixée par les identifiants CAN-ID du réseau CAN correspondant (dans l'ordre croissant, sur le réseau de communication 0x000 à 0x005)
Dans l'exemple considéré, dans la première colonne, la priorité est donnée aux données relatives à l'objet OA qui est l'objet le plus proche de l'origine du référentiel commun X-Y-Z et dont l'identifiant réseau « CAN-ID » est 0x000 pour le capteur C1, 0x001 pour le capteur C3 et 0x002 pour le capteur C5.

Les dernières données transmises sur le réseau CAN sont celles correspondant à l'objet OB qui est le plus éloigné à l'instant t0, de l'origine du référentiel commun X-Y-Z. L'identifiant réseau « CAN-ID » est 0x003 pour le capteur C1, 0x004 pour le capteur C3 et 0x005 pour le capteur C5.

Ainsi, tel que décrit dans le tableau de la figure 6, pour chaque capteur C1, C3 et C5, les données objets sont organisées en fonction de la distance physique (dans l'exemple considéré) des objets OA, OB par rapport à l'origine du référentiel commun X-Y-Z. Comme l'objet OB est plus éloigné que l'objet OA par rapport à l'origine, la priorité est donnée à l'objet OA et ce sont donc les informations relatives à l'objet OA qui sont transmises en premier sur le réseau CAN au module BSI. Chacun des capteurs C1, C3 et C5 envoie d'abord les données de l'objet OA sur le réseau CAN.

Selon l'invention, l'identifiant réseau « ID-CAN » est attribué dynamiquement aux données des objets OA, OB pour chaque capteur C1, C2 et C5 afin que les trames véhiculant les données sur le réseau CAN accèdent au réseau CAN de manière optimale.

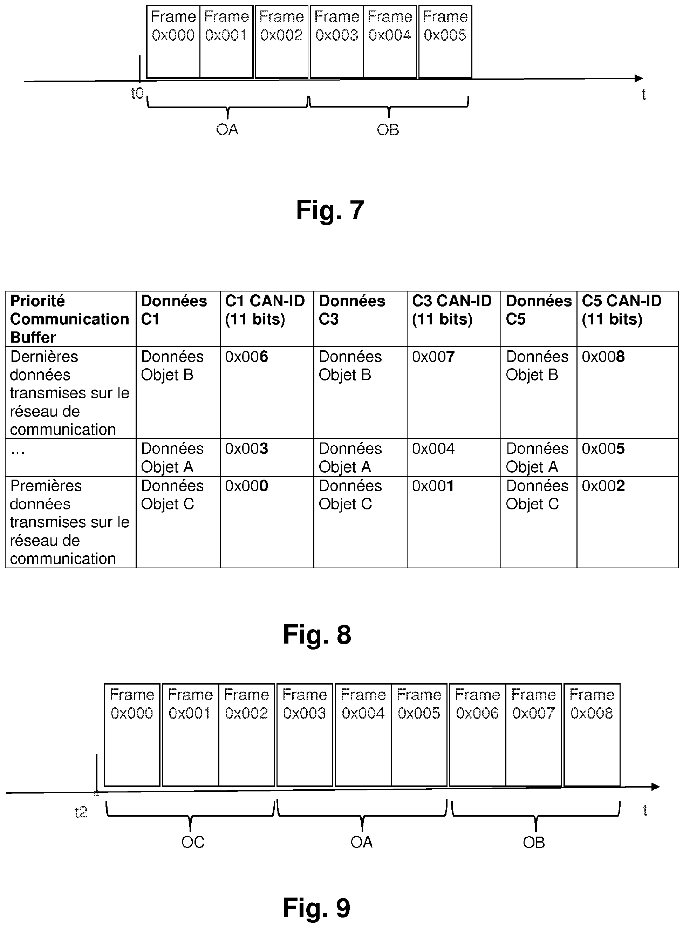

La figure 7 illustre l'organisation de la transmission de six trames successives et adjacentes sur le réseau CAN, résultant du tri opéré par le procédé selon l'invention suivant l'axe du temps t, à partir de l'instant t0. Cette organisation commence par les trames dont les « CAN-ID » sont 0x000, 0x001et 0x002, correspondant aux données relatives à l'objet OA, et se termine par les trames dont les « CAN-ID » sont 0x003, 0x004 et 0x005, correspondant aux données relatives à l'objet OB

Quelle que soit la technologie du réseau, un « buffer » de communication est utilisé pour stocker les données dans l'attente d'une disponibilité du réseau.

La façon d'organiser la transmission des trames dépend de la technologie du réseau et pour une technologie de réseau CAN, l'identifiant CAN-ID est un paramètre très important.

Le tableau de la figure 8 illustre un deuxième exemple d'organisation des « buffers » BF1-BFn, à l'intérieur de chacun des capteurs C1, C3 et C5 suite à l'identification d'un troisième objet OC à un instant t2 dans le référentiel commun X-Y-Z. L'instant t2 étant postérieur à l'instant t0.

Le procédé selon l'invention prend en compte ce nouvel événement et réorganise « dynamiquement » les « buffers » BF1-BFn de chaque capteur C1, C3 et C5 : réorganisation au fil du temps en fonction de l'instant d'apparition de l'objet OC dans l'environnement des capteurs C1, C3 et C5 (ici à l'instant t2) et de la distance dudit objet OC par rapport à l'origine du référentiel commun X-Y-Z à l'ensemble des capteurs C1, C3 et C5.

Dans ce tableau, la priorité de transmission des données sortantes des « buffers » BF1-BFn, pour chacun des capteurs C1, C3 et C5 vis-à-vis des trois objets OA, OB et OC, est toujours fixée par les identifiants réseau « CAN-ID » correspondant (dans l'ordre croissant, sur le réseau de communication 0x000 à 0x008)

Dans l'exemple considéré, dans la première colonne, la priorité est donnée aux données relatives à l'objet OC qui est l'objet le plus proche de l'origine du référentiel commun X-Y-Z et dont l'identifiant réseau « CAN-ID » est 0x000 pour le capteur C1, 0x001 pour le capteur C3 et 0x002 pour le capteur C5. (Ces « CAN-ID » correspondaient à ceux de l'objet OA dans l'exemple du tableau de la figure 6).

Viennent ensuite les données relatives à l'objet OA, deuxième objet le plus proche de l'origine du référentiel commun X-Y-Z, avec les identifiants réseau « CAN-ID » : 0x003 pour le capteur C1, 0x004 pour le capteur C3 et 0x005 pour le capteur C5 (ces « CAN-ID » correspondaient à ceux de l'objet OB dans l'exemple du tableau de la figure 6).

Les dernières données transmises sur le réseau CAN sont celles correspondant à l'objet OB qui est le plus éloigné de l'origine du référentiel commun X-Y-Z. L'identifiant réseau « CAN-ID » est 0x006 pour le capteur C1, 0x007 pour le capteur C3 et 0x008 pour le capteur C5.

Ainsi, tel que décrit dans le tableau de la figure 8, pour chaque capteur C1, C3 et C5, les données objets sont organisées en fonction de la distance physique (dans l'exemple considéré) des objets OA, OB et OC par rapport à l'origine du référentiel commun X-Y-Z. Comme les objets OA et OB sont plus éloignés que l'objet OC par rapport à l'origine, la priorité est donnée à l'objet OC et ce sont donc les informations relatives à l'objet OC qui sont transmises en premier sur le réseau CAN au module ASU. Chacun des capteurs C1, C3 et C5 envoie d'abord les données de l'objet OC sur le réseau CAN puis successivement les données relatives à l'objet OA puis OB.

La figure 9 illustre l'organisation de la transmission de neuf trames successives et adjacentes sur le réseau CAN, résultant du tri opéré par le procédé selon l'invention suivant l'axe du temps t, à partir de l'instant t2. Cette organisation commence par les trames dont les « CAN-ID » sont 0x000, 0x001et 0x002, correspondant aux données relatives à l'objet OC, se poursuit par les trames dont les « CAN-ID » sont 0x003, 0x004 et 0x005, correspondant aux données relatives à l'objet OA, et se termine par les trames dont les « CAN-ID » sont 0x006, 0x007 et 0x008, correspondant aux données relatives à l'objet OB.

Certaines technologies de réseau (FlexRay, Ethernet TS, ...) possèdent naturellement une définition commune de temps d'horloge qui est partagée entre les différents modules du réseau.

Dans ce cas, l'horodatage des données échangées sur le réseau (timestamp en terminologie anglo-saxonne) pourrait exploiter cette définition d'horloge « commune », en remplacement d'une définition d'horloge qui restait localisée au niveau de chaque module du réseau (comme c'est le cas pour la technologie CAN).

A titre de variante, après avoir exécuté et validé les résultats de l'algorithme de vraisemblance, le module ASU confirme l'identification de l'objet « vu » et demande à chacun des capteurs de respecter un identifiant spécifique pour cet objet « Object-ID ». Cet « Object-ID spécifique pourrait être choisi pour organiser les données dans les « buffers » de communication.

Par exemple, un véhicule peut identifier deux objets de nature différente comme un autre véhicule et un cycliste. Un « Object-ID » spécifique pourrait alors être attribué au cycliste pour que les données « cycliste » soient toujours prioritaires par rapport aux autres données et en conséquence être prises en compte plus rapidement par le réseau.

Un autre critère de choix est possible pour un « Object-ID » : l'ordre dans lequel les données sont transmises sur le réseau de communication dépend de la position relative des objets par rapport au véhicule. Le « Object-ID » pourrait être défini, d'une part, par la position relative de l'objet par rapport au véhicule et, d'autre part, par un horodatage (timestamp) de la première apparition de l'objet. D'autres critères, autres que la distance et l'horodatage, peuvent donc être pris en compte pour « caractériser » l'objet à la condition que tous les capteurs puissent percevoir ces autres critères.

Un autre critère de choix est encore possible pour un « Object-ID » : après avoir exécuté et validé les résultats de l'algorithme de vraisemblance, le module ASU confirme l'identification de l'objet « vu » par les capteurs en comparant les informations acquises des capteurs avec celles acquises par un système d'information extérieur Si au véhicule V et reçues par exemple dans le véhicule V par un système de communication SC : un système de communication inter-véhicule utilisant par exemple le protocole d'échange CarToX (entre véhicule ou entre le véhicule et une infrastructure routière, un serveur distant, ...) connecté au réseau. Le module ASU demande ensuite à chacun des capteurs C1-C5 de respecter un identifiant spécifique pour cet objet « Object-ID » en s'assurant que toutes les données issues de chacun des capteurs C1-C5 puissent bien être rattachées au même Object-ID quel que soit le capteur qui a « vu » l'objet. Le système de communication SC, transmettant lesdites informations au module ASU, via un lien LSC, contribue ainsi à définir la priorité de transmission des données sur le réseau.

## Revendications

1. Procédé de traitement d'informations issues d'une pluralité de capteurs (C1-C5) embarqués sur un véhicule automobile (V), lesdits capteurs (C1-C5) comportant chacun des moyens d'acquisition (M1) de données relatives à un ou plusieurs objets (OA, OB, OC) présents dans l'environnement du véhicule (V) et localisés dans un référentiel déterminé (x-y-z) propre à chaque capteur (C1-C5) et à différents instants (t0 ; t2), des moyens de traitement (M2) desdites données et des moyens de communication (M3) des données comportant plusieurs mémoires tampon (BF1-BFn) dans lesquelles sont stockées les données avant leur transmission vers un module de commande (ASU) via un réseau de communication (CAN) du véhicule (V), ledit procédé étant **caractérisé en ce qu'**il consiste à utiliser un seul et même référentiel commun (X-Y-Z) pour le ou les objets (OA, OB, OC) localisés par chaque capteur (C1,C3 et C5), les coordonnées du ou des objets localisés dans les référentiels locaux (x-y-z) propres à chaque capteur (C1, C3 et C5) étant converties dans le référentiel commun (X-Y-Z), et **en ce que** les mémoires tampon (BF1-BFn) de chaque capteur (C1,C3 et C5) sont configurés pour transmettre selon un ordre de priorité fonction d'une ou plusieurs caractéristiques ou critères du ou des objets (OA, OB, OC) localisés par chaque capteur (C1,C3 et C5) dans le référentiel commun (X-Y-Z) des données de chaque capteur (C1, C3 et C5) sur le réseau (CAN), chaque capteur appliquant un même ordre de priorité.

2. Procédé selon la revendication précédente, **caractérisé en ce que** la caractéristique du ou des objets (OA, OB, OC) prise en compte pour définir la priorité de transmission des données, est la proximité du ou des objets (OA, OB, OC) considérée par rapport à l'origine du référentiel commun (X-Y-Z) à un instant déterminé (t0 ; t2).

3. Procédé selon la revendication1, **caractérisé en ce que** le réseau est un réseau CAN et **en ce que** des trames de données correspondant à ou aux objets sont organisées en fonction d'un identifiant du réseau CAN (CAN-ID) qui est attribué dynamiquement à chacun des capteurs en fonction d'une priorité déterminée pour être transmises sur le réseau CAN ; l'identifiant (CAN-ID) déterminant l'ordre de transmission des données sur le réseau CAN.

4. Procédé selon la revendication 1, **caractérisé en ce que** le critère du ou des objets (OA, OB, OC) pris en compte pour définir la priorité de transmission des données, est la nature de l'objet lui-même ; un objet correspondant à un cycliste ou un piéton étant prioritaire sur un objet correspondant à un autre véhicule.

5. Procédé selon la revendication 1, **caractérisé en ce que** la caractéristique du ou des objets (OA, OB, OC) a un identifiant spécifique pour chaque objet et reconnaissable par chacun des capteurs (C1, C3 et C5); ledit identifiant définissant par lui-même la priorité de transmission.

6. Procédé selon l'une des revendications précédentes, **caractérisé en ce que** le référentiel commun (X-Y-Z) correspond au référentiel du véhicule (V).

7. Procédé selon l'une des revendications précédentes, **caractérisé en ce que** les capteurs (C1, C3 et C5), sont choisis parmi les capteurs suivants : RADAR, LiDAR, sonar, LASER scanner, caméra, capteur ultrasons, capteur infrarouge.

8. Véhicule autonome (V) mettant en oeuvre le procédé selon l'une des revendications précédentes.

## Patentansprüche

1. Verfahren zur Verarbeitung von Informationen mehrerer Sensoren (C1-C5) an Bord eines Kraftfahrzeugs (V), wobei die Sensoren (C1-C5) jeweils Mittel zur Erfassung (M1) von Daten zu einem oder mehreren Objekten (OA, OB, OC), die in der Umgebung des Fahrzeugs (V) vorhanden sind und sich in einem bestimmten Referenzrahmen (x-y-z) befinden, der für jeden Sensor (C1-C5) und zu unterschiedlichen Zeiten (t0; t2) spezifisch ist, Mittel zur Verarbeitung (M2) dieser Daten und Mittel zur Kommunikation (M3) der Daten, die mehrere Pufferspeicher (BF1-BFn) umfassen, in denen die Daten vor ihrer Übertragung an ein Steuermodul (ASU) über ein Kommunikationsnetzwerk (CAN) des Fahrzeugs (V) gespeichert werden Das Verfahren ist **dadurch gekennzeichnet, dass** es darin besteht, einen einzigen gemeinsamen Referenzrahmen (X-Y-Z) für das/die Objekt(e) (OA, OB, OC) zu verwenden, die von jedem Sensor (C1, C3 und C5) geortet werden, wobei die Koordinaten des/der Objekt(e) sich in den für jeden Sensor (C1, C3 und C5) spezifischen lokalen Referenzrahmen (x-y-z) befinden und in den gemeinsamen Referenzrahmen (X-Y-Z) umgewandelt werden, und dass die Pufferspeicher (BF1-BFn) jedes Sensors (C1, C3 und C5) sind so konfiguriert, dass sie in einer Prioritätsreihenfolge übertragen, die von einem oder mehreren Merkmalen oder Kriterien des/der Objekt(e) (OA, OB, OC) abhängt, die von jedem Sensor (C1, C3 und C5) im gemeinsamen Repository (X-Y-Z) lokalisiert werden, von Daten von jedem Sensor (C1, C3 und C5) im Netzwerk (CAN), wobei jeder Sensor die gleiche Prioritätsreihenfolge anwendet.

2. Verfahren nach dem vorhergehenden Anspruch, **dadurch gekennzeichnet, dass** das Merkmal des oder der Objekte (OA, OB, OC), das berücksichtigt wird, um die Priorität der Datenübertragung zu definieren, die Nähe des oder der Objekte (OA, OB, OC) ist, die in Bezug auf den Ursprung des gemeinsamen Bezugssystems (X-Y-Z) zu einem bestimmten Zeitpunkt (t0; t2) betrachtet wird.

3. Verfahren nach Anspruch 1, **dadurch gekennzeichnet, dass** das Netzwerk ein CAN-Netzwerk ist und dass den Objekten entsprechende Datenrahmen gemäß einer CAN-Netzwerkkennung (CAN-ID) organisiert werden, die jedem der Objekte dynamisch zugewiesen wird Sensoren entsprechend einer festgelegten Priorität, die im CAN-Netzwerk übertragen werden soll; Der Identifier (CAN-ID) bestimmt die Reihenfolge der Datenübertragung im CAN-Netzwerk.

4. Verfahren nach Anspruch 1, **dadurch gekennzeichnet, dass** das Kriterium des bzw. der Objekte (OA, OB, OC), das zur Definition der Priorität der Datenübertragung berücksichtigt wird, die Art des Objekts selbst ist; Ein Objekt, das einem Radfahrer oder Fußgänger entspricht, hat Vorrang vor einem Objekt, das einem anderen Fahrzeug entspricht.

5. Verfahren nach Anspruch 1, **dadurch gekennzeichnet, dass** die Eigenschaft des Objekts oder der Objekte (OA, OB, OC) eine spezifische Kennung für jedes Objekt aufweist und von jedem der Sensoren (C1, C3 und C5) erkennbar ist; wobei der Identifikator selbst die Übertragungspriorität definiert.

6. Verfahren nach einem der vorhergehenden Ansprüche, **dadurch gekennzeichnet, dass** der gemeinsame Bezugsrahmen (X-Y-Z) dem Rahmen des Fahrzeugs (V) entspricht.

7. Verfahren nach einem der vorhergehenden Ansprüche, **dadurch gekennzeichnet, dass** die Sensoren (C1, C3 und C5) aus folgenden Sensoren ausgewählt werden: RADAR, LiDAR, Sonar, LASER-Scanner, Kamera, Ultraschallsensor, Infrarotsensor.

8. Autonomes Fahrzeug (V), das das Verfahren nach einem der vorhergehenden Ansprüche umsetzt.

## Claims

1. Method for processing information from a plurality of sensors (C1-C5) on board a motor vehicle (V), said sensors (C1-C5) each comprising means for acquiring (M1) data relating to one or several objects (OA, OB, OC) present in the environment of the vehicle (V) and located in a determined reference frame (x-y-z) specific to each sensor (C1-C5) and at different times (t0; t2), means of processing (M2) of said data and means of communication (M3) of the data comprising several buffer memories (BF1-BFn) in which the data are stored before their transmission to a control module (ASU) via a communication network (CAN) of the vehicle (V), said method being **characterized in that** it consists of using a single common reference frame (X-Y-Z) for the object(s) (OA, OB, OC) located by each sensor (C1, C3 and C5) , the coordinates of the object(s) located in the local reference frames (x-y-z) specific to each sensor (C1, C3 and C5) being converted into the common reference frame (X-Y-Z), and **in that** the buffer memories (BF1-BFn) of each sensor (C1, C3 and C5) are configured to transmit in an order of priority depending on one or more characteristics or criteria of the object(s) (OA, OB, OC) located by each sensor (C1, C3 and C5) in the common repository (X-Y-Z) of data from each sensor (C1, C3 and C5) on the network (CAN), each sensor applying the same order of priority.

2. Method according to the preceding claim, **characterized in that** the characteristic of the object(s) (OA, OB, OC) taken into account to define the priority of data transmission, is the proximity of the object(s) (OA, OB, OC ) considered with respect to the origin of the common frame of reference (X-Y-Z) at a determined instant (t0; t2).

3. Method according to claim 1, **characterized in that** the network is a CAN network and **in that** data frames corresponding to the object(s) are organized according to a CAN network identifier (CAN-ID) which is dynamically assigned to each of the sensors according to a determined priority to be transmitted on the CAN network; the identifier (CAN-ID) determining the order of data transmission on the CAN network.

4. Method according to claim 1, **characterized in that** the criterion of the object(s) (OA, OB, OC) taken into account to define the priority of data transmission, is the nature of the object itself; an object corresponding to a cyclist or a pedestrian having priority over an object corresponding to another vehicle.

5. Method according to claim 1, **characterized in that** the characteristic of the object(s) (OA, OB, OC) has a specific identifier for each object and recognizable by each of the sensors (C1, C3 and C5); said identifier itself defining the transmission priority.

6. Method according to one of the preceding claims, **characterized in that** the common frame of reference (X-Y-Z) corresponds to the frame of reference of the vehicle (V).

7. Method according to one of the preceding claims, **characterized in that** the sensors (C1, C3 and C5) are chosen from the following sensors: RADAR, LiDAR, sonar, LASER scanner, camera, ultrasonic sensor, infrared sensor.

8. Autonomous vehicle (V) implementing the method according to one of the preceding claims.
